# EUROPEAN PATENT APPLICATION

(11) **EP 3 736 431 A1**
(43) Date of publication of application: **11.11.2020**
(21) Application number: 20171462.3
(22) Date of filing: 27.04.2020
(51) Int. Cl.: F02F 3/00, B22F 1/00, B33Y 80/00

(54) **ENGINE PISTON AND METHOD FOR MANUFACTURING THE SAME**

(30) Priority: 10.05.2019 JP 2019089845; 30.01.2020 JP 2020013474
(71) Applicant: MAZDA MOTOR CORPORATION, Fuchu-cho, Aki-gun Hiroshima 730-8670 (JP); Hiroshima University, Higashihiroshima-shi, Hiroshima 739-8511 (JP)
(72) Inventor: ICHIKAWA, Kazuo, Fuchu-cho, Aki-gun, Hiroshima 730-8670 (JP); MARUTANI, Yusuke, Fuchu-cho, Aki-gun,, Hiroshima 730-8670 (JP); TAKEZAWA, Akihiro, Higashihiroshima-shi, Hiroshima 739-8527 (JP)
(74) Representative: Müller-Boré & Partner Patentanwälte PartG mbB

(57) **Abstract**

There is provided an engine piston including a piston main body and a piston pin. The piston main body includes a piston head that has a crown surface forming a part of a wall of a combustion chamber and a pair of pin bosses that are connected to a side of the piston head opposite to the crown surface, arranged with a distance between the pin bosses in a first direction included in a radial direction of the piston head, and respectively have pin holes for the piston pin, the pin holes penetrating in the first direction. The piston head includes a pair of hollow parts extending in a second direction orthogonal to both the axial direction and the first direction at a position between the crown surface and each of the pin holes in the axial direction and a particulate filler filled in the pair of hollow parts.

## Description

### Background of the Invention

### 1.Field of the Invention

The present invention relates to an engine piston and a method for manufacturing the same.

### 2.Background Art

In a reciprocating engine (hereinafter abbreviated as "engine"), a piston reciprocating in a cylinder and a crankshaft are connected by a connecting rod. Specifically, the piston includes a piston main body that moves along the inner wall surface of the cylinder and a piston pin that connects the piston main body and the connecting rod. A small end of the connecting rod is connected to the piston pin and a large end of the connecting rod is connected to the crankshaft.

In such an engine structure, it is known that vibration generated in the piston due to fuel combustion (expansion stroke) is transmitted via the connecting rod to the crankshaft, and further transmitted from a crankshaft bearing to a wall surface on a side of a cylinder block. This vibration greatly affects the noise vibration harshness (NVH) performance of a vehicle on which the engine is mounted. In recent years, therefore, a pin damper is disposed inside the piston pin to reduce the vibration of the piston and consequently reduce the vibration of the engine (for example, JP 2015-161322 A).

However, in the conventional configuration in which the pin damper is disposed inside the piston pin, the weight of the entire piston including the piston pin is increased because of the pin damper. Consequently, there is still room for improvement in view of improvement of the thermal efficiency of an engine.

### Summary of the Invention

The present invention has been achieved in view of the above circumstances, and an object of the present invention is to provide an engine piston that can reduce engine vibration while preventing an increase in weight, and a method for manufacturing the engine piston.

An engine piston according to one aspect of the present invention includes a piston main body that reciprocates in an axial direction of a cylinder along an inner wall surface of the cylinder and a piston pin that connects the piston main body and a connecting rod, in which the piston main body includes a piston head that has a crown surface forming a part of a wall surface of a combustion chamber and a pair of pin bosses that are connected to a side of the piston head opposite to the crown surface, arranged with a distance in between in a first direction included in a radial direction of the piston head, and respectively have pin holes for the piston pin, the pin holes penetrating in the first direction, and the piston head includes a pair of hollow parts each of which extends in a second direction orthogonal to both the axial direction and the first direction at a position between the crown surface and each of the pin holes in the axial direction and a particulate filler filled in the pair of hollow parts.

### Brief Description of the Drawings

FIG. 1 is a cross-sectional view of an engine in which a piston according to an embodiment of the present invention is used;
FIG. 2 is a perspective view of a piston main body of the piston;
FIG. 3 is a front view of the piston main body of the piston;
FIG. 4 is a plan view of the piston main body of the piston;
FIG. 5 is a side view of the piston main body of the piston;
FIG. 6 is a bottom view of the piston main body of the piston;
FIG. 7 is a cross-sectional view (cross-sectional view taken along line VII-VII of FIG. 3) of the piston main body of the piston;
FIG. 8 is a schematic view of the piston main body of the piston illustrating a hollow part;
FIG. 9 is a plan view of the piston main body of the piston illustrating the hollow part;
FIG. 10 is a chart (graph) illustrating results of a vibration-damping property test;
FIG. 11 is a chart (graph) illustrating results of a frequency response analysis test;
FIG. 12 is a chart (graph) illustrating a relationship between the particle shape and particle size of a particulate filler and a loss coefficient;
FIG. 13 is an explanatory view illustrating a method for manufacturing a piston (fourth manufacturing method); and
FIG. 14 is a chart (graph) illustrating a relationship between the particle size and packing density of the particulate filler and the loss coefficient.

### Detailed Description of the Preferred Embodiments of the Invention

Hereinafter, a preferred embodiment of the present invention will be described in detail with reference to the accompanying drawings.

### [1. Engine Configuration]

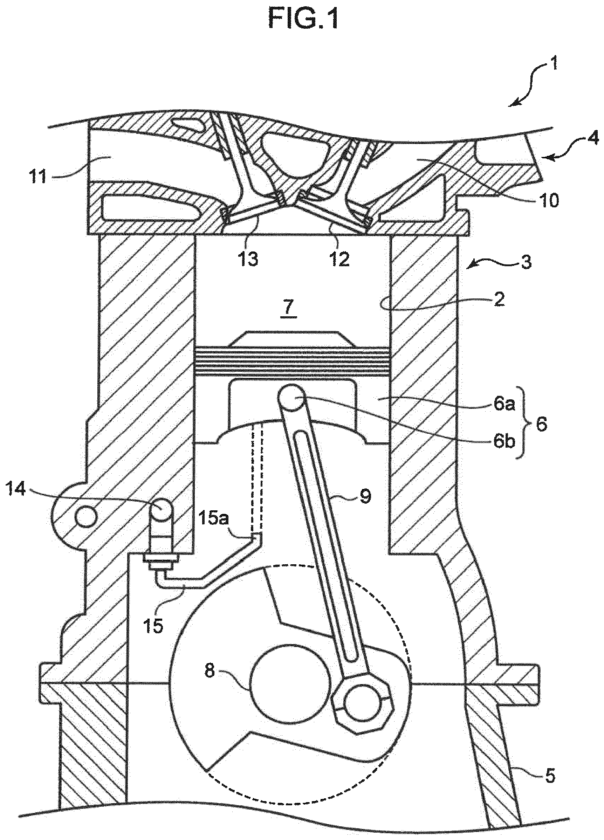

FIG. 1 is a cross-sectional view of an engine in which a piston according to an embodiment of the present invention is used. An engine 1 illustrated in FIG. 1 is a four-cycle in-line four-cylinder direct injection engine mounted on a vehicle as a power source for traveling. The engine 1 includes a cylinder block 3 having four, that is, first to fourth cylinders 2 therein, a cylinder head 4 attached to an upper surface of the cylinder block 3 so as to close the cylinders 2 from above, a crankcase 5 attached to a lower surface of the cylinder block 3 to form a crank chamber in cooperation with the cylinder block 3, and a piston 6 according to the present invention, the piston 6 being inserted in the cylinder 2 to be reciprocally slidable.

A combustion chamber 7 is defined above the piston 6, and fuel containing gasoline as a main component is supplied to the combustion chamber 7 by injection from an injector (not illustrated). The fuel supplied is mixed with air in the combustion chamber 7 and burns by ignition with a spark plug (not illustrated), and the piston 6 reciprocates in an up-down direction by receiving expansion force due to the combustion.

A crankshaft 8 that is an output shaft of the engine 1 is disposed below the piston 6. The crankshaft 8 is connected via a connecting rod 9 to the piston 6, and is driven to rotate about a central axis according to a reciprocating movement (up-down movement) of the piston 6. Specifically, the piston 6 includes a piston main body 6a and a piston pin 6b, and the piston main body 6a is connected via the piston pin 6b to a small end of the connecting rod 9, and a large end of the connecting rod 9 opposite to the small end is connected to the crankshaft 8.

The cylinder head 4 includes an intake port 10 for introducing air into the combustion chamber 7, an exhaust port 11 for discharging exhaust gas generated in the combustion chamber 7, an intake valve 12 that opens and closes an opening of the intake port 10 on a side of the combustion chamber 7, and an exhaust valve 13 that opens and closes an opening of the exhaust port 11 on the side of the combustion chamber 7. The engine 1 of the present embodiment is a four-valve engine including two intake valves and two exhaust valves. That is, the cylinder head 4 includes two intake ports 10, two intake valves 12 that respectively open and close openings thereof, two exhaust ports 11, and two exhaust valves 13 that respectively open and close openings thereof.

The intake valve 12 and the exhaust valve 13 are driven to open and close according to the rotation of the crankshaft 8 by a valve train mechanism including paired camshafts arranged in the cylinder head 4 and the like.

The cylinder block 3 includes a main gallery 14 extending into a sidewall on an exhaust side of each cylinder 2 in a cylinder row direction. Oil discharged from an oil pump (not illustrated) disposed in the engine 1 flows in the main gallery 14. An oil jet 15 for cooling a piston, the oil jet 15 communicating with the main gallery 14, is disposed near a lower side of the main gallery 14 for each cylinder 2. The oil jet 15 has a nozzle 15a disposed under the piston main body 6a, and injects engine oil (hereinafter abbreviated as "oil") from the nozzle 15a toward a lower surface of a piston head 20 to be described later. In the present embodiment, oil is always injected from the oil jet 15 during the operation of the engine 1.

### [2. Specific Configuration of Piston]

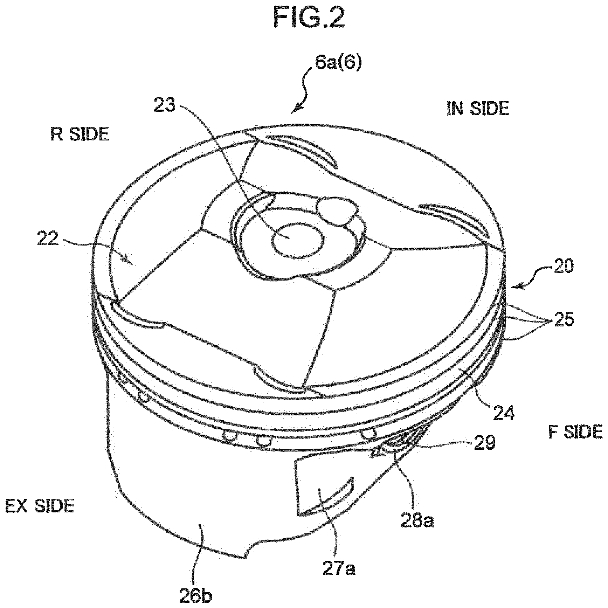

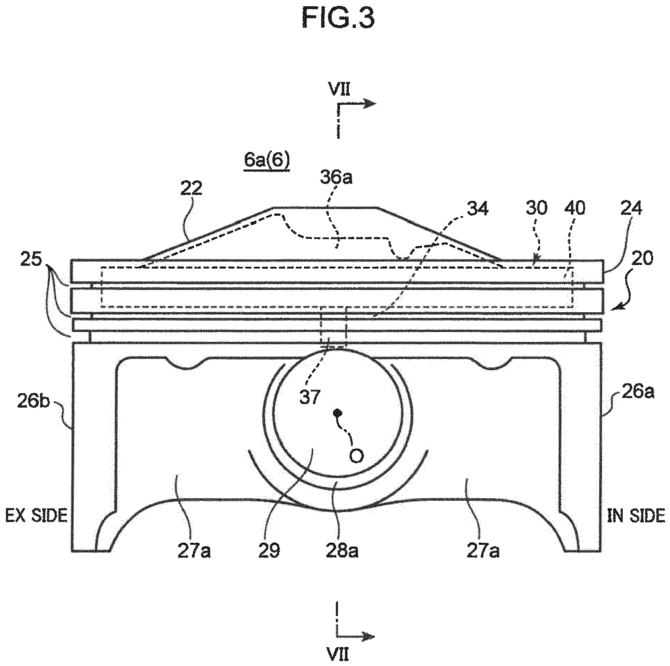

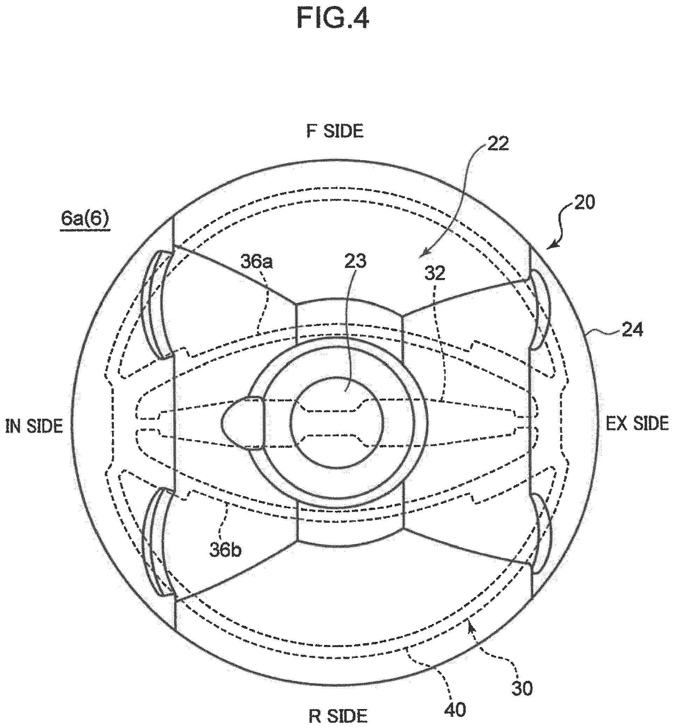

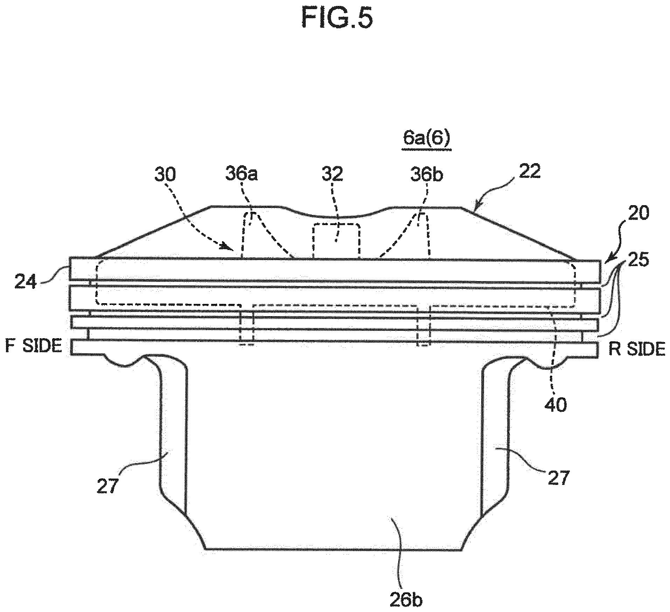

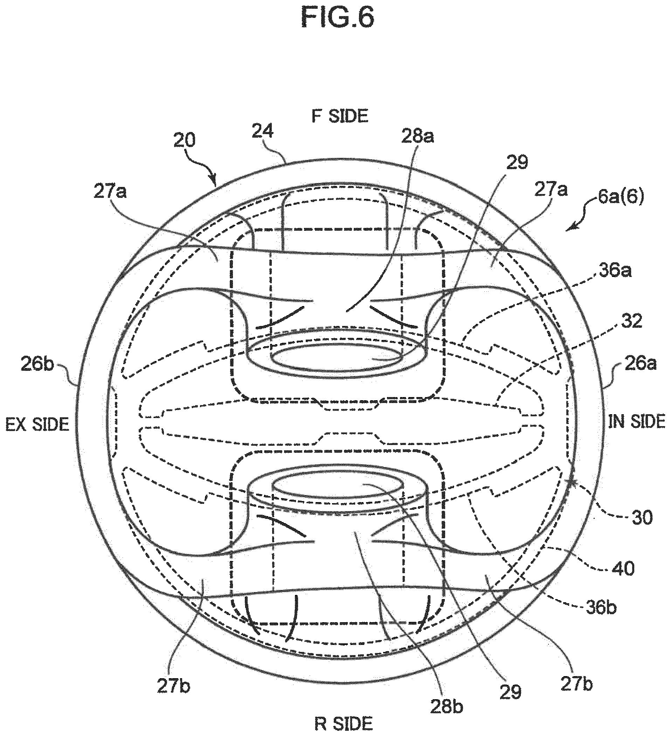

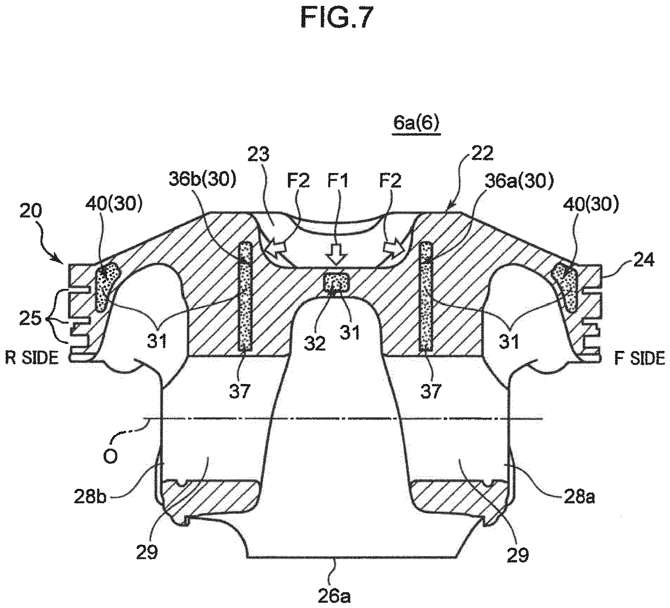

A structure of the piston main body 6a of the piston 6 will be mainly described with reference to FIGS. 2 to 7. FIGS. 2 to 7 each illustrate the piston main body 6a of the piston 6. FIG. 2 is a perspective view, FIG. 3 is a front view, FIG. 4 is a plan view, FIG. 5 is a side view, FIG. 6 is a bottom view, and FIG. 7 is a cross-sectional view (cross-sectional view taken along line VII-VII of FIG. 3). These figures each illustrate the piston main body 6a.

In the following description of the piston main body 6a, "up-down direction" is an axial direction of the cylinder 2 (cylinder axial direction). "Up" indicates a side of the combustion chamber 7 and "down" indicates a side of a crank chamber. In addition, "front-rear direction" (corresponding to "first direction" in the present invention) is a direction parallel to the crankshaft 8. "Front" corresponds to a front side of the engine 1 and "rear" corresponds to a rear side of the engine 1. Moreover, "left-right direction" (corresponding to "second direction" in the present invention) is a direction orthogonal to both the "up-down direction" and the "front-rear direction", and "left" indicates a side facing the exhaust port 11 and "right" is a side facing the intake port 10. In each figure, the terms "F side" and "R side" indicate the front side and the rear side of the engine 1, respectively. The terms "IN side" and "EX side" indicate the side facing the intake port 10 and the side facing the exhaust port 11, respectively.

The piston main body 6a includes the piston head 20 and paired skirt parts 26a and 26b formed by extending an outer periphery of the piston head 20 downward.

The piston head 20 is formed of a cylindrical body, has a crown surface 22 that forms a part of a wall surface of the combustion chamber 7 (bottom surface) on its upper surface, and has an outer peripheral surface 24 that slide-contacts an inner wall surface of the cylinder 2. The crown surface 22 is a surface facing a ceiling surface of the pent roof combustion chamber 7, and is formed so that areas other than an outer edge part project upward (mountain shape) so as to correspond to the ceiling surface. The crown surface 22 includes a bowl-shaped cavity 23 disposed at a substantially central portion in a radial direction. The cavity 23 is a part where fuel is injected from an injector (not illustrated) disposed on the ceiling surface of the combustion chamber 7 and is formed by recessing downward a part of the crown surface 22.

The outer peripheral surface 24 of the piston head 20 has a plurality of ring grooves 25 into which piston rings are fitted. In the present embodiment, three ring grooves 25 are formed. A first compression ring, a second compression ring (top ring and second ring), and an oil ring (all not illustrated) are attached to the ring grooves 25 in this order from the ring groove 25 near the crown surface 22. The compression ring seals the space between the piston 6 and the inner wall surface of the cylinder 2 so that a combustion gas generated in the combustion chamber 7 does not leak to the side of the crank chamber. The oil ring is used to scrape off excessive oil attached to the inner wall surface of the cylinder 2.

One skirt part 26a of the paired skirt parts 26a, 26b is disposed on the IN side (right side) of the outer peripheral surface 24 of the piston head 20, and the other skirt part 26b is disposed on the EX side (left side) of the outer peripheral surface 24 of the piston head 20. As the skirt parts 26a, 26b slide-contact the inner wall surface of the cylinder 2, swinging of the piston 6 during its reciprocating movement is reduced.

Paired pin bosses 28a, 28b in the front-rear direction are disposed between the paired skirt parts 26a and 26b on a lower surface (surface opposite to crown surface) of the piston head 20. Of these pin bosses 28a, 28b, the pin boss 28a on the F side (front side) is disposed between front ends of the paired skirt parts 26a, 26b. The pin boss 28a is connected via a wall 27a to the front ends of the skirt parts 26a, 26b. The pin boss 28b on the R side (rear side) is disposed between rear ends of the paired skirt parts 26a, 26b. The pin boss 28b is connected via a wall 27b to the rear ends of the skirt parts 26a, 26b. That is, when the piston main body 6a is viewed from its lower surface, the paired pin bosses 28a, 28b and the paired skirt parts 26a, 26b are annularly continuous via the walls 27a, 27b (see FIG. 6).

Each of the pin bosses 28a, 28b includes a pin hole 29 penetrating in the front-rear direction. The piston pin 6b (not illustrated) is inserted into the pin holes 29 of the pin bosses 28a, 28b so as to extend over the pin bosses 28a, 28b. The piston main body 6a is thus connected via the piston pin 6b to the connecting rod 9.

A hollow part 30 is formed inside the piston head 20, and a particulate filler 31 is filled in the hollow part 30. Hereinafter, this will be described in detail.

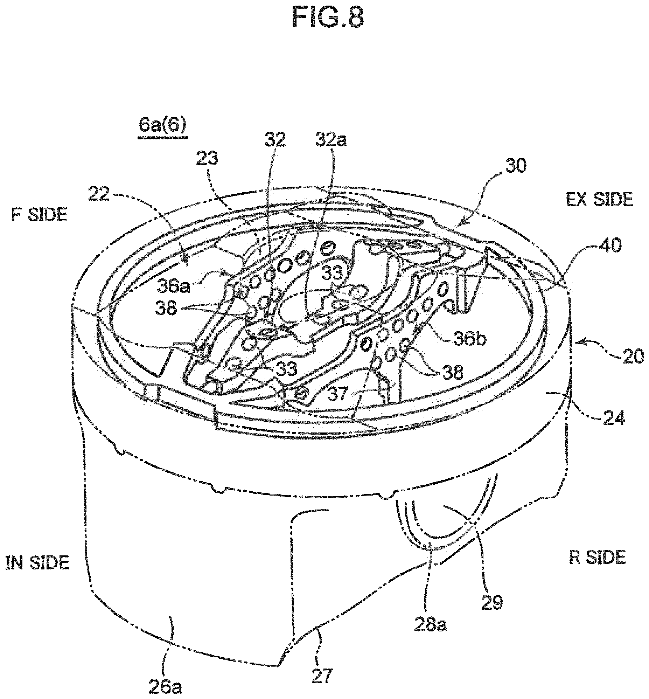

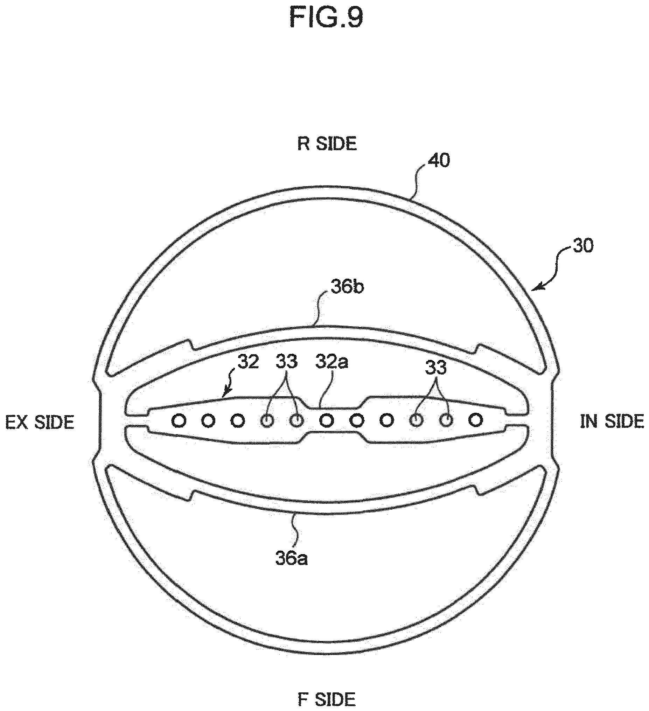

FIG. 8 and FIG. 9 illustrate the hollow part 30 of the piston head 20. FIG. 8 and FIG. 9 indirectly illustrate the hollow part 30 as a core. That is, the piston main body 6a is manufactured by casting as in a first manufacturing method to be described later, and the hollow part 30 is formed by the core. Consequently, for convenience of illustration, FIG. 8 and FIG. 9 illustrate the core replaced with the hollow part 30 (description will be given of hollow part 30 instead of core).

As illustrated in FIGS. 3 to 9, the hollow part 30 includes a center hollow part 32 extending through the center of the piston head 20 in the left-right direction (radial direction of piston main body 6a) (corresponding to "second hollow part" in the present invention), paired side hollow parts 36a, 36b extending along the center hollow part 32 in the left-right direction at positions on both front and rear sides of the center hollow part 32 (corresponding to "first hollow part" in the present invention), and an annular hollow part 40 circumferentially extending along the outer edge of the piston head 20. Both longitudinal ends of the center hollow parts 32 and both longitudinal ends of the paired side hollow parts 36a, 36b are connected to the annular hollow part 40, and thus the center hollow part 32, the paired side hollow parts 36a, 36b, and the annular hollow part 40 communicate with each other.

The center hollow part 32 is a hollow part whose cross-section has a rectangular shape that is slightly flat in the up-down direction. In a plan view, the center hollow part 32 has a shape whose width gradually increases from both longitudinal ends toward the center, and a narrow part 32a whose width is narrower than that of other parts is formed at the center.

The center hollow part 32 is disposed so as to pass below the cavity 23 in the left-right direction while maintaining a substantially constant distance interval with the crown surface 22. Consequently, when viewed from the front (when viewed from F side), the center hollow part 32 has an arch shape projecting upward as a whole, and is also shaped so as to be bent, that is, recessed downward at a position corresponding to the cavity 23, specifically, such that the narrow part 32a and both side portions thereof are recessed downward along the cavity 23 (see FIG. 7 and FIG. 8).

As illustrated in FIG. 7 and FIG. 8, a plurality of pillars 33 for reinforcement, the pillars 33 extending in the up-down direction to connect an upper wall surface and a lower wall surface of the center hollow part 32, are disposed at a plurality of positions in a longitudinal direction in the center hollow part 32. One of the pillars 33 is disposed at the longitudinal center of the center hollow part 32, that is, at the center of the crown surface 22. The other pillars 33 are arranged in a line with a predetermined distance therebetween in the longitudinal direction of the center hollow part 32.

The paired side hollow parts 36a, 36b are hollow parts whose cross-section has a rectangular shape that is flat in the front-rear direction. Both ends of each of the paired side hollow parts 36a, 36b are connected to the annular hollow part 40 at positions near both ends of the center hollow part 32.

Of the paired side hollow parts 36a, 36b, the side hollow part 36a on the F side (front side) is curved in a plan view so as to project to a radially front side of the piston head 20 and pass in front of the cavity 23. The side hollow part 36a on the F side is thus disposed so as to be located above the pin hole 29 of the pin boss 28a on the F side (front side) (see FIG. 6 and FIG. 7). On the other hand, the side hollow part 36b on the R side (rear side) is curved in a plan view so as to project to a radially rear side of the piston head 20 and pass in the rear of the cavity 23. The side hollow part 36b on the R side is thus disposed so as to be located above the pin hole 29 of the pin boss 28b on the R side (rear side).

As illustrated in FIG. 7, the side hollow parts 36a, 36b are respectively located at substantially axial centers of the pin holes 29 of the pin bosses 28a, 28b, specifically, above the substantially axial centers on upper wall surfaces of the respective pin holes 29. As illustrated in FIG. 3, an extending part 37 extending from the remaining part to project downward is disposed at a position corresponding to a center O of the pin hole 29 in the longitudinal direction of each of the side hollow parts 36a, 36b. A part of each of the side hollow parts 36a, 36b (extending part 37) is thus disposed near and above the pin hole 29.

A plurality of pillars 38 for reinforcement, the pillars 38 extending in the front-rear direction to connect a front wall surface and a rear wall surface of the side hollow part 36a (36b), are disposed inside the side hollow part 36a (36b). When the side hollow part 36a (36b) is viewed from the F side or the R side, the pillars 38 are disposed in a concentrated manner in an area of the side hollow part 36a (36b) that mainly overlaps the cavity 23. That is, the arrangement density of the pillars 38 in the area of the side hollow part 36a (36b) overlapping the cavity 23 is higher than the arrangement density of other portions (see FIG. 8).

The hollow part 30 is filled with the particulate filler 31 as described above (illustrated in FIG. 7). The particulate filler 31 is a metal powder, and in the present embodiment, a metal powder composed of true spherical aluminum alloy particles having a particle size (diameter) of 30 µm is filled in the hollow part 30. The optimum packing density of the particulate filler 31 will be described later in detail.

### [3. Operations and Effects]

In the piston 6 according to the embodiment described above, the hollow part 30 is formed in the piston main body 6a and is filled with the particulate filler 31. It is thus possible to effectively prevent vibration generated when fuel burns in the combustion chamber 7 (expansion stroke) from being transmitted from the piston 6 to the connecting rod 9. That is, vibration energy is converted to thermal energy by friction between particles of the particulate filler 31 filled in the hollow part 30 and friction between the inner wall surface of the hollow part 30 and the particles. Consequently, this energy conversion (damping action) prevents vibration from being transmitted from the piston main body 6a to the piston pin 6b. In this case, the side hollow parts 36a, 36b of the hollow part 30 are disposed between the crown surface 22 and the pin hole 29, that is, disposed in a path where the vibration of the piston head 20 due to combustion is mainly transmitted to the piston pin 6b. It is thus possible to effectively prevent the vibration from being transmitted to the piston pin 6b. As a result, in the piston 6 according to the embodiment, it is possible to effectively prevent vibration from being transmitted from the piston 6 to the connecting rod 9.

Moreover, the piston 6 has a structure in which the hollow part 30 is formed in a part of the piston main body 6a (piston head 20) having a conventional solid structure, and is filled with the particulate filler 31. For this reason, the weight hardly increases structurally as compared with a conventional normal piston (piston main body). As a result, according to the piston 6 of the embodiment, it is possible to prevent vibration due to combustion from being transmitted from the piston 6 to the connecting rod 9 and further to reduce the vibration of the engine 1, and at the same time prevent the increase in weight.

In particular, since the piston main body 6a according to the embodiment includes the center hollow part 32 and the annular hollow part 40 in addition to the side hollow parts 36a, 36b, it is possible to prevent vibration due to combustion from being transmitted from the crown surface 22 to the piston pin 6b over a wider range. Specifically, in the engine 1 of the embodiment in which the cavity 23 is formed in the crown surface 22 and fuel is injected toward the cavity 23, combustion expands mainly from the cavity 23 in the combustion chamber 7 (crown surface 22). For this reason, according to the structure of the piston 6 of the embodiment in which the center hollow part 32 is formed at a position corresponding to the cavity 23 and is filled with the particulate filler 31, it is possible to effectively prevent the vibration generated in the cavity 23 due to combustion from being transmitted to the piston pin 6b. As a result, it is possible to more effectively prevent vibration due to combustion from being transmitted from the piston 6 to the connecting rod 9.

In addition, the side hollow parts 36a, 36b and the center hollow part 32 that are located near the cavity 23 include the pillars 33, 38 for reinforcement. Consequently, it is advantageous because the durability of the piston main body 6a is appropriately achieved, although the piston main body 6a includes the hollow parts 32, 36a, 36b.

More specifically, during the combustion of fuel in the combustion chamber 7, a downward combustion pressure acts on the crown surface 22 as a whole, and inside the cavity 23, as indicated by white arrows in FIG. 7, a downward combustion pressure F1 acts on an inner bottom surface of the cavity 23 and an outward combustion pressure F2 acts on each of front and rear inner wall surfaces of the cavity 23. However, the center hollow part 32 has a narrow width at its central portion corresponding to the cavity 23 (includes narrow part 32a), and the pillars 33 for reinforcement connecting the upper wall surface and the lower wall surface of the center hollow part 32 are formed in the center hollow part 32. This configuration prevents the center hollow part 32 from being deformed (crushed) by the combustion pressure F1. On the other hand, regarding the side hollow parts 36a, 36b, the side hollow parts 36a, 36b themselves have a cross-section that is hardly deformed by the upward combustion pressure and is flat in the front-rear direction (rectangular cross-section). In addition, the pillars 38 for reinforcement connecting front wall surfaces and rear wall surfaces of the side hollow parts 36a, 36b are formed in the side hollow parts 36a, 36b. In particular, the pillars 38 are formed in a concentrated manner in areas of the side hollow parts 36a, 36b that overlap the cavity 23. This configuration prevents the side hollow parts 36a, 36b from being deformed (crushed) by the combustion pressure F2.

Since the center hollow part 32 and the side hollow parts 36a, 36b are filled with the particulate filler 31, it is inconceivable that the hollow parts 32, 36a, 36b are deformed by the combustion pressures F1, F2. However, according to the piston 6 of the embodiment, the configuration in which the pillars 33 and 38 are formed more prevents the deformation of the center hollow part 32 and the side hollow parts 36a, 36b. As a result, according to the piston 6 of the embodiment, it is possible to appropriately achieve the durability of the piston main body 6a, although the piston main body 6a includes the center hollow part 32 and the side hollow parts 36a, 36b.

According to the piston 6 (piston main body 6a) described above, vibration energy is converted to thermal energy by friction between particles of the particulate filler 31 filled in the hollow part 30 and friction between the inner wall surface of the hollow part 30 and the particles. Consequently, it is conceivable that seizure of the particles occurs due to the energy conversion (damping action). However, as oil is injected into the piston 6 by the oil jet 15 in the engine 1, the particulate filler 31 is indirectly cooled and thus the seizure of the particles is prevented. As a result, according to the piston 6, it is possible to prevent vibration from being transmitted from the piston 6 to the connecting rod 9 by the energy conversion (damping action) for a long time.

### [4. Comparative Test]

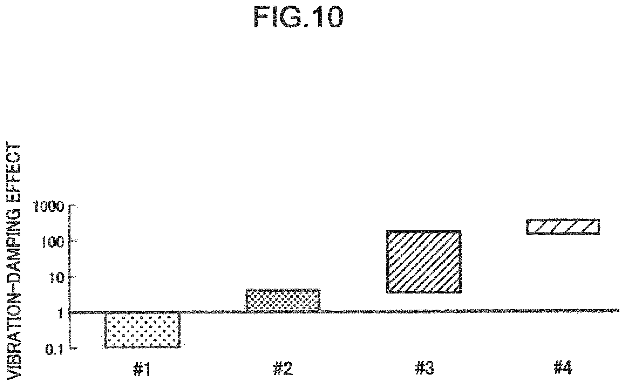

FIG. 10 illustrates results of a test using a model (test piece) for verifying a vibration-damping effect (damping effect) by the configuration of the piston 6 according to the present invention. The test results illustrated in FIG. 10 are obtained by vibrating test pieces #1 to #4 that are made of aluminum alloy (A2017) and are assumed to be a piston main body and measuring loss coefficients of the test pieces # 1 to # 4, based on test methods for vibration-damping property in damped composite beam of unconstrained type (JISK7391).

Here, the test piece # 1 is a solid rectangular parallelepiped metal body made of aluminum alloy, and the test piece # 2 is a metal body of the test piece # 1 having a lattice structure. The test piece # 3 is obtained by filling a metal powder (particulate filler made of an aluminum alloy) in a hollow part of the metal body of the test piece # 2. The test piece #4 is obtained by optimizing the particle shape of the metal powder in test piece #3, that is, being filled with a metal powder having the highest loss coefficient. Specifically, the test piece #4 is obtained by being filled with a metal powder composed of true spherical aluminum alloy particles having a particle size (diameter) of 30 µm, which is similar to the particle size of the particulate filler 31. In addition, the test results show the loss coefficients of the test pieces # 2 to # 4 as relative values based on the loss coefficient of test piece # 1. The larger the loss coefficient is, the greater the vibration-damping effect is.

As illustrated in FIG. 10, the loss coefficients of the test pieces # 3, #4 filled with the metal powder are 200 to 500 times larger than the test piece #1 having a simple solid structure. It is found that the test pieces #3, #4 achieve high vibration-damping effect. This is because vibration energy is converted to thermal energy by friction between particles of the metal powder and friction between an inner wall surface of the metal body and the particles, and thus the vibration of the test pieces #3, #4 is damped.

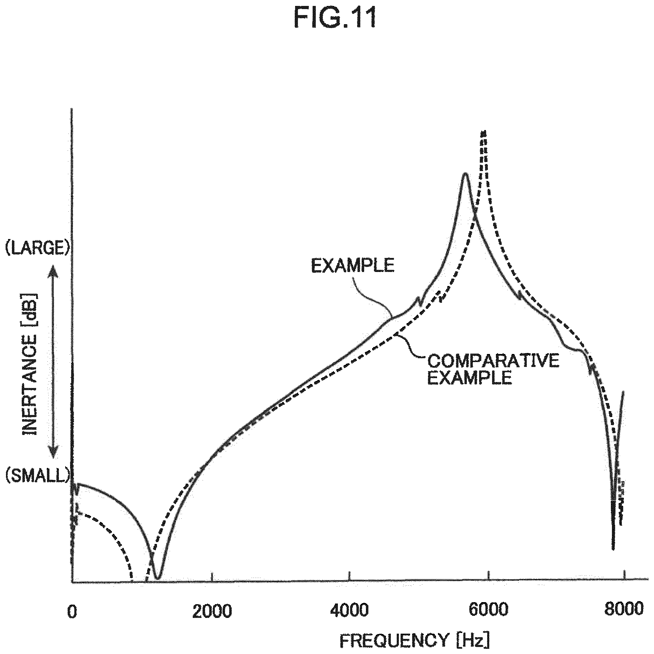

FIG. 11 illustrates results of a frequency response analysis test performed on the piston main body 6a according to the embodiment (example) described above and a piston main body of a piston having a conventional normal structure (comparative example). The horizontal axis indicates a frequency (Hz) and the vertical axis indicates the magnitude of inertance (dB). In the test, a constant excitation force (N) is applied to a crown surface of the piston main body with an impulse hammer, an acceleration (m/s2) is measured at a pin boss, and the inertance (dB) is calculated based on the measurement result.

As illustrated in FIG. 11, the inertance value is maximized at around 5,900 Hz in both the example and the comparative example. However, the maximum value of the inertance of the piston main body of the example is lower than that of the piston main body of the comparative example. Specifically, the maximum value is lower by about 7% to 9%. It is also found from this result that, according to the piston main body 6a of the embodiment described above, the piston main body 6a being filled with the particulate filler 31, the damping effect by the conversion of the vibration energy to the thermal energy, which is described above, effectively prevents vibration from being transmitted from the piston main body 6a to the piston pin 6b.

### [5. Manufacturing Method]

Next, a method for manufacturing the piston main body 6a will be described. The following first to third manufacturing methods are suitable as the method for manufacturing the piston main body 6a, which is described above.

### <First Manufacturing Method>

The first manufacturing method is a method for manufacturing the piston main body 6a by casting, and is the most basic manufacturing method. The method includes a preparation step, a pouring step, a product removal step, and a filler filling step. That is, a mold for forming the appearance of the piston main body 6a and a core for forming the hollow part 30 are prepared first (preparation step). The core that is illustrated in FIG. 8 and is used for the description of the hollow part 30 is prepared as the core. Next, after molten aluminum alloy (molten metal) is poured into the mold having the core set therein and solidified (pouring step), the casting, that is, the piston main body is removed from the mold and the core is then removed from the piston main body, so that the hollow part is formed (product removal step). A particulate filler, that is, a metal powder composed of true spherical aluminum alloy particles is then filled in the hollow part (filler filling step). At a time of casting, a passage for allowing the hollow part to communicate with the outside is formed in the piston main body, and the core is removed and the particulate filler is filled through this passage. After the particulate filler is filled in the hollow part, the passage is welded and closed with a metal material (aluminum alloy). As a result, the piston main body 6a having the particulate filler 31 filled therein is completed.

### <Second Manufacturing Method>

The second manufacturing method is common to the first manufacturing method in that the piston main body 6a is manufactured by casting. However, the second manufacturing method is different from the first manufacturing method in that a filler enclosure body having a particulate filler enclosed therein is manufactured in advance (enclosure body manufacturing step) and the piston main body 6a is insert-casted (molded) by using the filler enclosure body as an insert part. That is, the second manufacturing method includes the enclosure body manufacturing step described above, a pouring step, and a product removal step.

It is preferable that the filler enclosure body is manufactured at the enclosure body manufacturing step using a metal powder additive manufacturing machine (for example, metal 3D printer). Specifically, the metal powder additive manufacturing machine forms one layer of the core illustrated in FIG. 8, the core having a metal powder (powder composed of true spherical aluminum alloy particles) enclosed therein, at a time and stacks these layers in order. That is, a step of spreading the metal powder on a vertically movable modeling base, a step of scanning the metal powder on the modeling base with a laser beam to melt and solidify the metal powder, and a step of lowering the modeling base by a fixed amount are repeated in this order. At this time, the portion corresponding to the hollow part 30 is not irradiated with the laser beam so that the metal powder remains. The filler enclosure body having the metal powder (that is, particulate filler 31) filled therein, which is the same as the core in shape, is thus manufactured.

At the pouring step, a mold for forming the appearance of the piston main body 6a and the filler enclosure body are prepared, the filler enclosure body is set in the mold as an insert part, and aluminum alloy (molten metal) is poured into the mold to solidify the aluminum alloy. At the product removal step, the casting including the filler enclosure body, that is, the piston main body is removed from the mold. As a result, the piston main body 6a that includes the hollow part 30 having the particulate filler 31 filled therein is completed.

The method for manufacturing the filler enclosure body at the enclosure body manufacturing step is not limited to the method using the metal powder additive manufacturing machine. For example, the filler enclosure body may be manufactured by casting a hollow casting having the same shape as the core illustrated in FIG. 8 and filling a particulate filler, that is, a metal powder composed of true spherical aluminum alloy particles in the casting.

### <Third Manufacturing Method>

The third manufacturing method is a method for modeling the entire piston main body 6a using a metal powder additive molding machine (for example, metal 3D printer). For example, one layer of the piston main body 6a is formed from its lower end (end opposite to crown surface 22) at a time and these layers are stacked. That is, a step of spreading the metal powder (powder composed of true spherical aluminum alloy particles) on a vertically movable modeling base, a step of scanning the metal powder on the modeling base with a laser beam to melt and solidify the metal powder, and a step of lowering the modeling base by a fixed amount are repeated in this order. At this time, the portion corresponding to the hollow part 30 is not irradiated with the laser beam so that the metal powder remains. The piston main body 6a that includes the hollow part 30 having the metal powder, that is, the particulate filler 31 filled therein is thus manufactured. In the case of this manufacturing method, the piston main body 6a and the particulate filler 31 filled in the hollow part 30 are made of the same material.

### <Fourth Manufacturing Method>

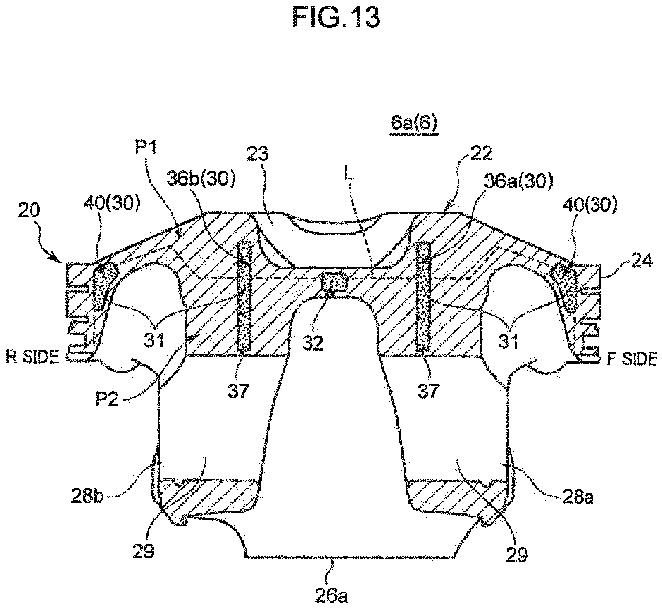

The fourth manufacturing method is a method for separately forming two parts of the piston main body 6a along a line L dividing the hollow part 30 into upper and lower parts, the line L being indicated by a dash line in FIG. 13 for example, that is, a first upper part P1 including the crown surface 22 and a second lower part P2 and integrating these upper and lower parts P1, P2.

Specifically, the fourth manufacturing method includes (A) a method for separately and independently manufacturing the first part P1 and the second part P2 and then welding the first part P1 and the second part P2 to integrate these first and second parts P1, P2, and (B) a method for manufacturing the second part P2 first and then insert-casting (molding) the first part P1 using the second part P2 as an insert part. Any of these methods may be employed. In this case, the parts P1, P2 in the method (A) and the second part P2 in the method (B) may be manufactured by casting or may be modeled using a metal powder additive manufacturing machine (for example, metal 3D printer). Casting or modeling using the metal powder additive manufacturing machine may be appropriately selected based on the specific shape and structure of the piston main body 6a. For example, if the second part P2 having relatively complicated shape and structure is manufactured using the metal powder additive manufacturing machine and the first part P1 is manufactured by casting, the manufacturing time using the metal powder additive manufacturing machine can be reduced. Consequently, the piston main body 6a can be manufactured reasonably and efficiently. In the case of the method (B), in order to enhance the adhesion of the first part P1 to the second part P2, a blasting process such as sand blasting is preferably performed on a bonding surface of the second part P2 with the first part P1 in advance.

In the case of the method (A), the particulate filler can be filled according to the first manufacturing method described above. For example, a passage that allows the hollow part 30 to communicate with the outside is formed in the second part P2, and the particulate filler is filled through the passage. Further, in the case of the method (B), the particulate filler can be filled according to the third manufacturing method. That is, the filler enclosure body having the particulate filler enclosed therein is manufactured in advance and the first part P1 is casted using the filler enclosure body and the second part P2 as insert parts, so that the particulate filler is filled.

In the fourth manufacturing method, the position of the line L dividing the piston main body 6a into the first part P1 and the second part P2 is not limited to the position illustrated in FIG. 13. However, the position of the line L is preferably set to a position where the piston main body 6a is vertically divided such that the second part P2 includes at least a part of the hollow part 30 and the pin bosses 28a, 28b.

The step of manufacturing the first part P1, the step of manufacturing the second part P2, and the step of integrating the first part P1 and the second part P2 correspond to a first part manufacturing step, a second part manufacturing step, and an integration step, respectively in the present invention. Consequently, in the method (B) of insert-casting (molding) the first part P1 using the second part P2 as an insert part, the first part manufacturing step and the integration step are performed in one step.

### [6. Modifications and the like]

The piston 6 and the method for manufacturing the same according to the embodiment of the present invention have been described. However, the piston 6 and the method for manufacturing the same are an illustration of a preferred embodiment of an engine piston and a method for manufacturing the same according to the present invention. The specific configuration and manufacturing method can be appropriately changed without departing from the scope of the present invention. For example, the following aspects can be adopted.

(1) In the embodiment, a metal powder composed of true spherical aluminum alloy particles having a particle size (diameter) of 30 µm is filled as the particulate filler 31 that is filled in the hollow part 30 of the piston main body 6a. However, the shape and particle size of pf particles of the metal powder are not limited to these. For example, it is also possible to use a metal powder composed of elliptical particles.

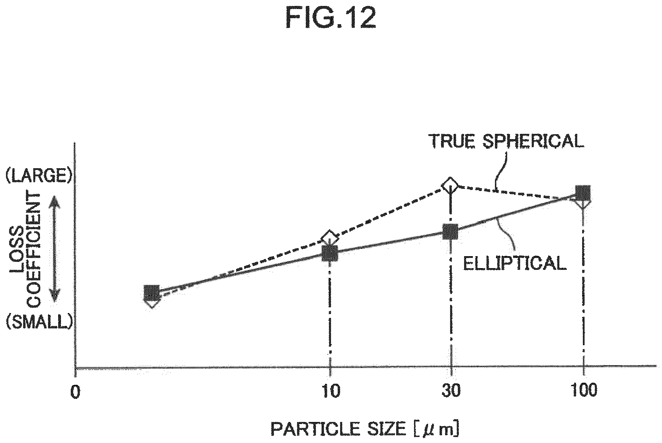

FIG. 12 is a chart (graph) illustrating a relationship between the particle shape and particle size of the particulate filler 31 and a loss coefficient. FIG. 12 illustrates test results obtained by vibrating test specimens prepared by filling a metal powder of aluminum alloy in a container made of aluminum alloy (A2017), which is assumed to be a piston main body, and measuring its loss coefficient, based on test methods for vibration-damping property in damped composite beam of unconstrained type (JISK7391). The test is performed on two types of metal powders, namely, a metal powder composed of true spherical particles and a metal powder composed of elliptical particles, while the particle size of each of the particles is changed.

As illustrated in FIG. 12, in both cases of true spherical particles and elliptical particles, the relatively larger the particle size is, the relatively larger the loss coefficient tends to be. Regardless of the particle size, true spherical particles tend to have a relatively larger loss coefficient than elliptical particles. This is because true spherical particles are easier to move than elliptical particles thus the conversion of vibration energy to thermal energy is easily facilitated.

As illustrated in FIG. 12, in the case of the metal powder composed of true spherical particles, the loss coefficient is large when the particle size is in the range of 10 µm to 100 µm, and is the largest especially when the particle size is 30 µm. Consequently, when the metal powder composed of true spherical particles is used as the particulate filler 31, the metal powder composed of particles having a particle size of 10 µm to 100 µm, more preferably having a particle size of about 30 µm, is used as the particulate filler 31.

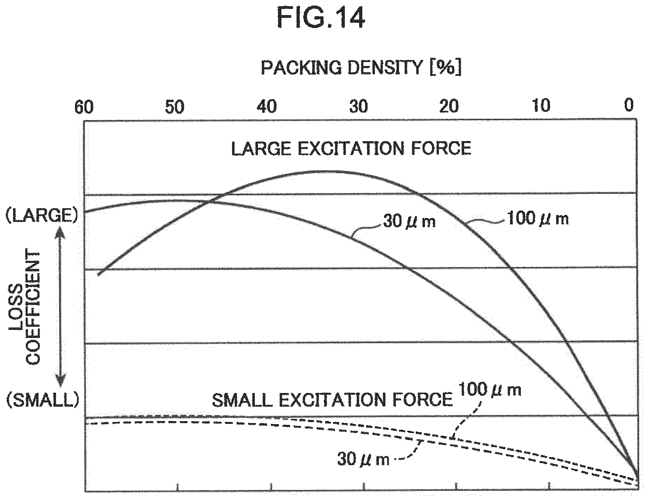

FIG. 14 is a chart (graph) illustrating a relationship between a packing density (%) of the particulate filler 31 in the hollow part 30 and a loss coefficient. FIG. 14 illustrates test results obtained by vibrating test specimens prepared by filling a metal powder of aluminum alloy in a container made of aluminum alloy (A2017), which is assumed to be a piston main body, and measuring its loss coefficient, based on test methods for vibration-damping property in damped composite beam of unconstrained type (JISK7391), as in the test results illustrated in FIG. 12. The test is performed on a metal powder composed of true spherical particles having a particle size of 30 µm and a metal powder composed of true spherical particles having a particle size of 100 µm, while excitation forces having different magnitudes are applied to these metal powders.

When the excitation force is small, as indicated by broken lines in FIG. 14, the difference in the particle size has relatively little effect on the loss coefficient. In both the metal powder having a particle size of 30 µm and the metal powder having a particle size of 100 µm, the loss coefficient is maximized at a packing density of about 50%, and the loss coefficient at a packing density of 40% to 60% is larger than that in other ranges.

On the other hand, when the excitation force is large, in the case of the metal powder having a particle size of 30 µm, as indicated by a solid line in FIG. 14, the loss coefficient is maximized at a packing density of about 50%, and the loss coefficient at a packing density of 40% to 60% is larger than that in other ranges, as in the case of a small excitation force. In the metal powder having a particle size of 100 µm, the loss coefficient is maximized at a packing density of 35%, and the loss coefficient at a packing density of 25% to 40% is larger than that in other ranges.

Consequently, when the metal powder composed of true spherical particles is used as the particulate filler 31, it is preferable to set the packing density of the particulate filler 31 in the hollow part 30 to be in the range of 25% to 60% in order to achieve a vibration reduction effect.

(2) In the embodiment, the particulate filler 31 made of aluminum alloy is used. However, the material of the particulate filler 31 is not limited to the aluminum alloy, and the particulate filler 31 made of other materials may be used. For example, it is also possible to use the particulate filler 31 made of a metal material having a higher thermal conductivity than aluminum alloy, such as copper. In this case, the conversion of vibration energy to thermal energy is easily facilitated, and thus a higher vibration-damping effect can be expected. Alternatively, it is also possible to use the particulate filler 31 made of ceramic. In this case, a heat insulating effect can be expected in addition to the vibration-damping effect. It is thus useful for reducing a heat loss during a warm-up operation or a lean combustion operation of an engine, for example.

The material of particles of the particulate filler 31 filled in the hollow part 30 is not limited to one type, and the particulate filler 31 composed of two or more types of particles having different materials and shapes may be used. For example, it is also possible to use the particulate filler 31 in which aluminum alloy particles and ceramic or/and copper particles are mixed.

(3) In the embodiment, the hollow part 30 includes the center hollow part 32, the paired side hollow parts 36a, 36b, and the annular hollow part 40, and these hollow parts communicate to each other. However, the shape of the hollow part 30 is not limited thereto. For example, the center hollow part 32, the paired side hollow parts 36a, 36b, and the annular hollow part 40 may be separated and independent from each other. In this case, as the particulate filler 31 to be filled in at least some of the hollow parts, the particulate filler 31 of a different type (material) from the particulate filler 31 in the other hollow parts may be filled. In short, it is only required that the hollow part 30 is disposed at a position where transmission of vibration is effectively prevented in view of the shape of the piston main body 6a and the like. In this case, a material of the particulate filler 31 to be filled that is optimal for each hollow part may be used.

The present invention described above is summarized as follows.

An engine piston according to one aspect of the present invention includes a piston main body that reciprocates in an axial direction of a cylinder along an inner wall surface of the cylinder and a piston pin that connects the piston main body and a connecting rod, in which the piston main body includes a piston head that has a crown surface forming a part of a wall surface of a combustion chamber and a pair of pin bosses that are connected to a side of the piston head opposite to the crown surface, arranged with a distance in between in a first direction included in a radial direction of the piston head, and respectively have pin holes for the piston pin, the pin holes penetrating in the first direction, and the piston head includes a pair of hollow parts each of which extends in a second direction orthogonal to both the axial direction and the first direction at a position between the crown surface and each of the pin holes in the axial direction and a particulate filler filled in the pair of hollow parts.

According to this piston structure, the vibration energy of the piston main body due to fuel combustion (expansion stroke) is converted to thermal energy by friction between particles of the particulate filler filled in the hollow part of the piston main body and friction between the inner wall surface of the hollow part and the particles. Vibration is thus prevented from being transmitted from the piston main body to the piston pin. In particular, since the hollow part is disposed at the position between the crown surface and each of the pin holes, the vibration is effectively prevented from being transmitted from the crown surface to the piston pin.

In addition, the piston has the structure in which the hollow part is formed in a part of the piston head having a conventional solid structure and is filled with the particulate filler, and thus the weight of the piston main body hardly increases. Consequently, with this piston, it is possible to reduce engine vibration and at the same time prevent an increase in weight.

In the piston described above, both ends of the hollow part in the second direction are preferably located at an outer edge of the piston head.

With this structure, it is possible to prevent vibration from being transmitted from the crown surface to the piston pin over a wider range. Consequently, it is more advantageous in reducing engine vibration.

In the piston according to each of the above aspects, a pillar extending in the first direction is preferably formed in the hollow part.

According to this structure, the pillar prevents the hollow part from being deformed due to a combustion pressure, and thus the rigidity of the piston main body can be achieved satisfactorily.

In the piston according to each of the above aspects, when each of the pair of hollow parts is defined as a first hollow part, the piston head may include a cavity that is formed in the crown surface, a second hollow part that is provided at a position between the pair of first hollow parts and corresponding to at least the cavity, and a particulate filler that is filled in the second hollow part.

In recent engines, for example, in order to perform stratified combustion under a high compression ratio, in some cases, a cavity (recess) is formed in a crown surface of a piston main body and fuel is injected toward the cavity to ignite. In such an engine, combustion expands mainly from the cavity in a combustion chamber (crown surface). Consequently, according to the configuration described above in which the second hollow part having the particulate filler filled therein is formed at the position corresponding to the cavity, vibration due to combustion is more effectively prevented from being transmitted from the crown surface to the piston pin.

In the piston according to each of the above aspects, the piston head preferably includes an annular hollow part that extends circumferentially along an outer edge of the piston head and a particulate filler that is filled in the annular hollow part.

According to this configuration, it is possible to prevent vibration from being transmitted from the crown surface to the piston pin at the outer edge (peripheral edge) of the piston main body. Consequently, it is more advantageous in reducing engine vibration.

In the piston according to each of the above aspects, a particle of the particulate filler preferably has a spherical shape.

Particles of the particulate filler may have an elliptical shape, for example. However, if the particles have a spherical shape, the particles themselves are easier to move, and friction between the particles and friction between the particles and the inner wall surface of the hollow part are facilitated. That is, the spherical particulate filler enables the efficient conversion of vibration energy to thermal energy and more prevents vibration from being transmitted from the piston main body to the piston pin.

In this case, a particle size of the particle is preferably 10 µm to 100 µm. Further, a packing density of the particulate filler in the hollow part is preferably 25% to 60%.

By setting the particle size of the particles of the particulate filler and the packing density in the hollow part within such ranges, it is possible to achieve a high vibration reduction effect and to highly prevent vibration from being transmitted from the piston main body to the piston pin, as shown in the test results to be described above.

A method for manufacturing a piston according to another aspect of the present invention is a method for manufacturing the piston main body of the aspects described above, the method including a preparation step of preparing a mold and a core for forming the hollow part, a pouring step of setting the core in the mold and pouring a metal material into the mold, a product removal step of removing the piston main body from the mold and further removing the core from the piston main body to form the hollow part, and a filler filling step of filling the particulate filler in the hollow part.

According to this manufacturing method, the piston main body described above can be manufactured by a normal casting method using a mold and a core.

In addition, a method for manufacturing a piston according to another aspect of the present invention is a method for manufacturing the piston main body of the aspects described above, the method including an enclosure body manufacturing step of manufacturing a filler enclosure body in which the particulate filler is enclosed, a pouring step of preparing a mold and the filler enclosure body and setting the filler enclosure body in the mold as an insert part to pour a metal material into the mold, and a product removal step of removing the piston main body from the mold.

According to this manufacturing method, it is possible to manufacture the piston main body described above by using a filler enclosure body manufactured in advance as an insert part, that is, so-called insert casting (molding).

A method for manufacturing a piston according to yet another aspect of the present invention is a method for manufacturing the piston main body of the aspects described above, in which by repeating a step of spreading a metal powder on a modeling base, a step of scanning the metal powder on the modeling base with a laser beam to melt and solidify the metal powder, and a step of lowering the modeling base by a fixed amount in this order, the fixed amount of the piston main body is formed in a layer in order, a portion corresponding to the hollow part is not irradiated with the laser beam during forming such that the metal powder remains, and thus the hollow part in which the metal powder is enclosed as the particulate filler is formed in the piston main body.

According to this manufacturing method, it is possible to manufacture the piston main body described above using a metal powder additive manufacturing machine such as a metal 3D printer.

A method for manufacturing a piston according to still another aspect of the present invention is a method for manufacturing the piston main body of the aspects described above, the method including a first part manufacturing step of manufacturing a first part that is a part of the piston main body and includes the crown surface, a second part manufacturing step of manufacturing a second part of the piston main body other than the first part, the second part including a part forming at least a part of the hollow part and the pair of piston bosses, and an integration step of integrating the first part and the second part.

According to the method for manufacturing the piston main body by dividing the piston main body into the first part and the second part, the first part and the second part can be manufactured by different methods. Consequently, by selecting the method for manufacturing the first part or the second part according to the specific shape of the piston main body, the piston main body described above can be manufactured rationally and efficiently.

This application is based on Japanese Patent application No. 2019-089845 filed in Japan Patent Office on May 10, 2019 and Japanese Patent application No. 2020-013474 filed in Japan Patent Office on January 30, 2020, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. An engine piston comprising:
a piston main body (6a) that reciprocates in an axial direction of a cylinder (2) along an inner wall surface of the cylinder; and
a piston pin (6b) that connects the piston main body and a connecting rod (9), wherein
the piston main body includes
a piston head (20) that has a crown surface (22) forming a part of a wall surface of a combustion chamber, and
a pair of pin bosses (28a,28b) that are connected to a side of the piston head opposite to the crown surface, arranged with a distance in between in a first direction included in a radial direction of the piston head, and respectively have pin holes (29) for the piston pin, the pin holes penetrating in the first direction, and
the piston head includes
a pair of hollow parts (36a,36b) each of which extends in a second direction orthogonal to both the axial direction and the first direction at a position between the crown surface and each of the pin holes in the axial direction, and
a particulate filler (31) filled in the pair of hollow parts.

2. The engine piston according to claim 1, wherein both ends of the hollow part in the second direction are located at an outer edge of the piston head.

3. The engine piston according to claim 1 or 2, wherein a pillar (38) extending in the first direction is formed in the hollow part.

4. The engine piston according to any one of claims 1 to 3, wherein
when each of the pair of hollow parts is defined as a first hollow part, the piston head includes
a cavity (23) that is formed in the crown surface,
a second hollow part (32) that is provided at a position between the pair of first hollow parts and corresponding to at least the cavity, and
a particulate filler (31) that is filled in the second hollow part.

5. The engine piston according to any one of claims 1 to 4, wherein
the piston head includes
an annular hollow part (40) that extends circumferentially along an outer edge of the piston head, and
a particulate filler (31) that is filled in the annular hollow part.

6. The engine piston according to any one of claims 1 to 5, wherein a particle of the particulate filler has a spherical shape.

7. The engine piston according to claim 6, wherein a particle size of the particle is 10 µm to 100 µm.

8. The engine piston according to any one of claims 1 to 7, wherein a packing density of the particulate filler in the hollow part is 25% to 60%.

9. A method for manufacturing the piston main body according to any one of claims 1 to 8, the method comprising:
a preparation step of preparing a mold and a core for forming the hollow part;
a pouring step of setting the core in the mold and pouring a metal material into the mold;
a product removal step of removing the piston main body from the mold and further removing the core from the piston main body to form the hollow part; and
a filler filling step of filling the particulate filler in the hollow part.

10. A method for manufacturing the piston main body according to any one of claims 1 to 8, the method comprising:
an enclosure body manufacturing step of manufacturing a filler enclosure body in which the particulate filler is enclosed;
a pouring step of preparing a mold and the filler enclosure body and setting the filler enclosure body in the mold as an insert part to pour a metal material into the mold; and
a product removal step of removing the piston main body from the mold.

11. A method for manufacturing the piston main body according to any one of claims 1 to 8, wherein by repeating a step of spreading a metal powder on a modeling base, a step of scanning the metal powder on the modeling base with a laser beam to melt and solidify the metal powder, and a step of lowering the modeling base by a fixed amount in this order, the fixed amount of the piston main body is formed in a layer in order, a portion corresponding to the hollow part is not irradiated with the laser beam during forming such that the metal powder remains, and thus the hollow part in which the metal powder is enclosed as the particulate filler is formed in the piston main body.

12. A method for manufacturing the piston main body according to any one of claims 1 to 8, the method comprising:
a first part manufacturing step of manufacturing a first part that is a part of the piston main body and includes the crown surface;
a second part manufacturing step of manufacturing a second part of the piston main body other than the first part, the second part including a part forming at least a part of the hollow part and the pair of piston bosses; and
an integration step of integrating the first part and the second part.
